# EUROPEAN PATENT SPECIFICATION

(11) **EP 3 088 732 B1**
(45) Date of publication and mention of the grant of the patent: **05.02.2020**
(21) Application number: 16166071.7
(22) Date of filing: 19.04.2016
(51) Int. Cl.: F03D 1/06

(54) **METHOD AND SYSTEM FOR REPLACING A SINGLE WIND TURBINE BLADE**
VERFAHREN UND SYSTEM ZUM ERSETZEN EINER EINZELNEN WINDTURBINENSCHAUFEL
PROCÉDÉ ET SYSTÈME DE REMPLACEMENT D'UNE PALE DE TURBINE ÉOLIENNE UNIQUE

(30) Priority: 27.04.2015 US 201514697054
(43) Date of publication of application: 02.11.2016
(73) Proprietor: General Electric Company, Schenectady, NY 12345 (US)
(72) Inventor: NEUMANN, Ulrich Werner, Greenville, SC South Carolina 29615 (US); COSTAIN, Kevin Thomas, Hardwick, MN Minnesota 56134 (US); HACH, Forrest Christopher, Hardwick, MN Minnesota 56134 (US); JOHNSON, Michael Royce, Schenectady, NY New York 12345 (US); PFEIFFER, Gaylon Mitchell, Schenectady, NY New York 12345 (US); REDD II,, Rodney, Marietta, GA Georgia 30339 (US); WILLMAN, Stephanie Lohberg, Greenville, SC South Carolina 29615 (US)
(74) Representative: ZBM Patents - Zea, Barlocci & Markvardsen

(56) References cited:
- EP-A1- 2 369 174
- EP-A2- 2 725 220
- WO-A2-2009/128708

## Description

The subject matter disclosed herein relates generally to the art of wind turbines and, more particularly, to a method and system for replacing a wind turbine blade.

Wind generators convert energy provided by air currents into electricity. The air currents rotate large rotor blades or propellers that are mounted in nacelles at the top of a tower. The blades spin a rotor relative to a stator to generate an electrical current. The rate of rotation is controlled by varying blade pitch as well as through the use of various braking systems. During high wind conditions, the blade pitch is adjusted to spill wind energy in order to limit rotational speed. Occasionally, the braking system is employed to further prevent the blades from achieving high rotational speeds. During low wind conditions, the blade pitch is adjusted in order to capture as much wind energy as possible.

Over time, the wind generators require maintenance. Debris, hailstones and the like oftentimes impact the blades and cause damage. Replacing a worn or damaged blade generally requires the presence of one or more large ground or sea based cranes. The large cranes are used to retain and lower the blade to a surface such as the ground or a ships deck. In some cases, replacing a blade necessitates that others of the blades be moved to an off balance position. That is, a brake system is activated to position the blade being replaced in a position that is horizontal to ground. In such a case, the others of the blades are off-balance imparting forces to the braking system. In other cases, the blade is placed in a position perpendicular to ground and lowered. In such cases, multiple crews are required to rotate the blade to prevent contact between the surface and a tip portion of the blade that may result in damage. See, for example, EP 2 725 220 and EP 2 369 174 regarding known blade handling systems.

The present invention is defined by the appended claims.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial perspective view of a wind turbine support hub having a system for effecting replacement of a single wind turbine blade in accordance with an exemplary embodiment;
FIG. 2 is a partial perspective view a wind turbine blade of FIG. 1 suspended a first distance from the wind turbine support hub by a plurality of support members;
FIG. 3 depicts a support member and hydraulic jack cylinder in an extended configuration in accordance with an exemplary embodiment;
FIG. 4 depicts the hydraulic jack cylinder of FIG. 3 in a retracted configuration;
FIG. 5 is a partial perspective view of a plurality of bracket members secured to the wind turbine support hub and a plurality of bracket elements secured to the wind turbine blade;
FIG. 6 depicts a plurality of cable climbing members and a plurality of support members supporting the wind turbine blade from the wind turbine support hub;
FIG. 7 depicts one of the plurality of cable climbing members supporting the wind turbine blade from the wind turbine support hub;
FIG. 8 depicts the wind turbine blade of FIG. 1, supported from the wind turbine support hub through only the plurality of cable climbing members;
FIG. 9 depicts the wind turbine blade being lowered toward ground;
FIG. 10 is a partial perspective view of a wind turbine support hub having a system for effecting replacement of a single wind turbine blade in accordance with another exemplary embodiment
FIG. 11 is a partial perspective view the wind turbine blade of FIG. 10 suspended a first distance from the wind turbine support hub by plurality of fist hoisting devices in accordance with an aspect of an exemplary embodiment;
FIG. 12 is a partial perspective view of the wind turbine blade of FIG. 11 depicting attachment of a plurality of hook elements, in accordance with an aspect of an exemplary embodiment;
FIG. 13 is a partial perspective view of the wind turbine blade of FIG. 12 suspended from the wind turbine support hub through the plurality of first hoisting devices and a plurality of second hoisting devices;
FIG. 14 is a partial perspective view of the wind turbine blade of FIG. 13 supported from the wind turbine support hub by the plurality of second hoisting devices following completion of a handshake maneuver;
FIG. 15 depicts the wind turbine blade of FIG. 14 being lowered from the wind turbine support hub without the use of a crane by the plurality of second lifting members; and
FIG. 16 depicts the wind turbine blade of FIG. 15 resting on the ground.

The detailed description explains embodiments of the invention, together with advantages and features, by way of example with reference to the drawings.

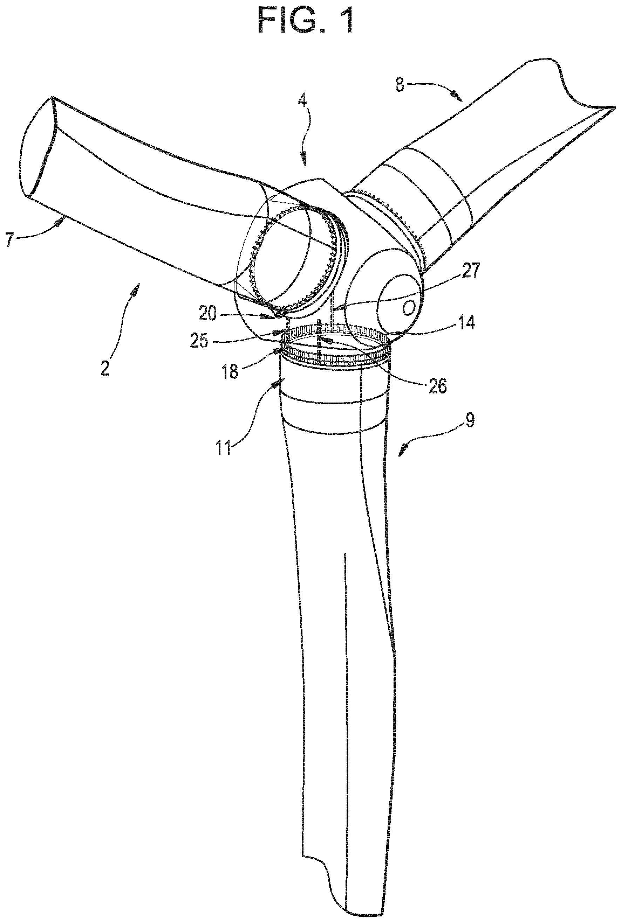

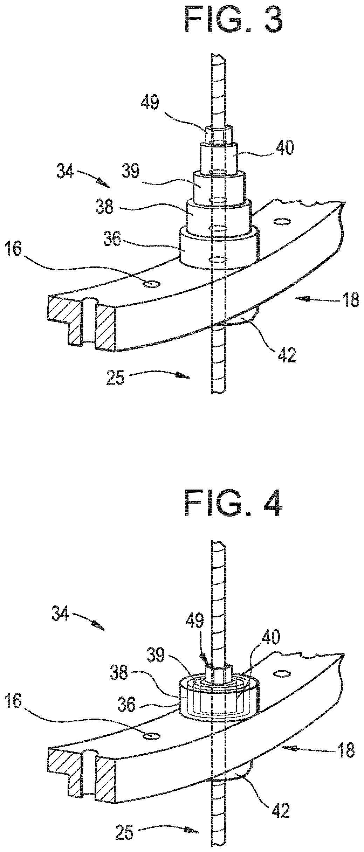

A wind turbine is indicated generally at 2 in FIG. 1. Wind turbine 2 includes a support hub 4 having attached thereto a first wind turbine blade 7, a second wind turbine blade 8, and a third wind turbine blade 9. Third wind turbine blade 9 includes a first end or root portion 11 and a second end or tip portion 12. Of course, first and second wind turbine blades 7 and 8 also include first end or root portions (not separately labeled) as well as second end or tip portions (also not separately labeled). End portion 11 includes an array of mechanical fasteners, indicated generally at 14, that extend through a corresponding plurality of openings, one of which is shown at 16 (FIG. 3) provided on a blade receiving portion 18 of support hub 4. In accordance with an exemplary embodiment, a blade replacement system, a portion of which is indicated at 20, is provided within support hub 4.

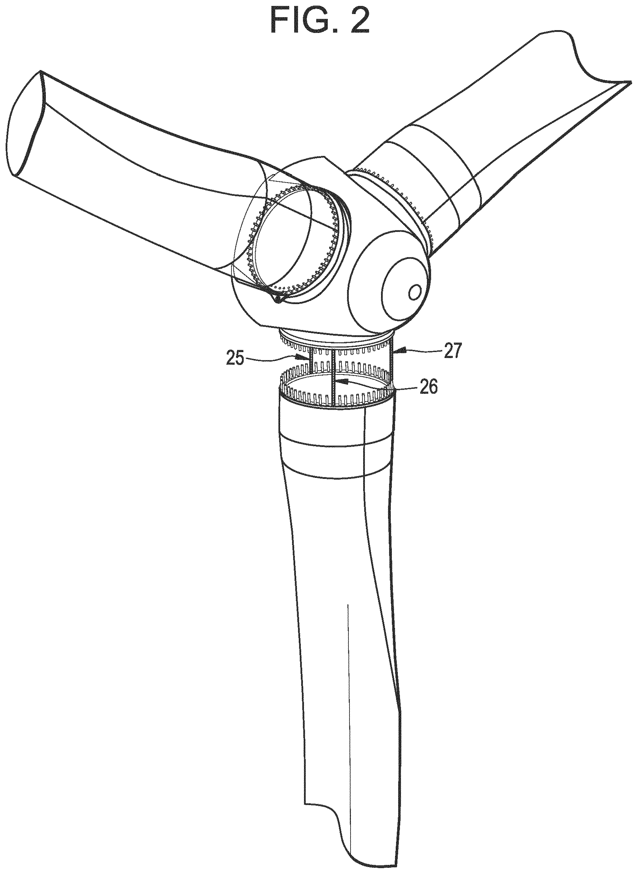

Blade replacement system 20 includes a first support member 25, a second support member 26, and a third support member 27. Support members 25-27 take the form of threaded rods (not separately labeled) that extend through openings 16 in blade receiving portion 18 and engage with threaded openings (not separately labeled) previously provided with fasteners 14 as shown in FIG. 2. Once installed, a hydraulic jacking cylinder 34, illustrated in FIG. 3, is guided over each support member 25-27. Hydraulic jacking cylinder 34 includes a base section 36 that rests on an inner surface (not separately labeled) of blade receiving portion 18 and a plurality of telescoping sections 38-40. Base section 36 and telescoping sections 38-40 include a central passage 42 that receives a corresponding one of support members 25-27.

In FIG. 3, hydraulic jacking cylinder 34 is shown mounted over a free end (not separately labeled) of support member 25. Once in position, telescoping sections 38-40 are extended and a retaining nut 49 is threaded onto first support member 25. Once additional hydraulic jacking cylinders (not shown) are provided on first and second support members 26 and 27, retaining nuts 49 are removed from fasteners 14. At this point, telescoping sections 38-40 are shifted into base section 36 (FIG. 4) separating third wind turbine blade 9 from support hub 4 a first distance. Once separated the first distance, one at a time, retaining nuts 49 are moved away from base section 36 and telescoping sections 38-40 are again extended in preparation for further separation of third wind turbine blade 9 from support hub 4.

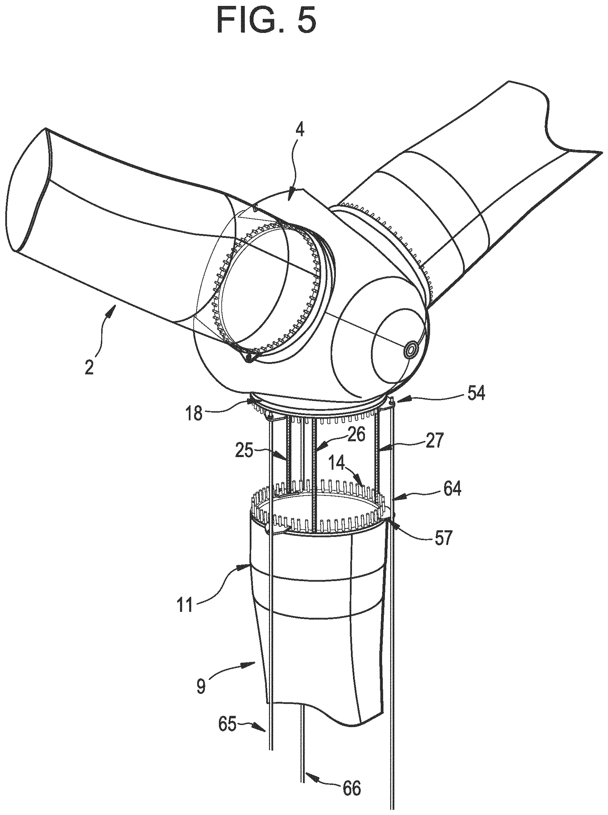

Blade replacement system 20 also includes a plurality of bracket members, one of which is indicated at 54 and a plurality of bracket elements, one of which is indicated at 57. When separated the first distance, bracket members 54, are mounted to blade receiving portion 18 and bracket elements 57 are mounted to select ones of fasteners 14 on third wind turbine blade 9, as shown in FIG. 5. Each bracket member 54 and bracket element 57 includes mounting structure, shown in the form of openings (not separately labeled). A number of cables 64, 65, and 66, are connected to corresponding ones of bracket members 54. Specifically, one end (not separately labeled) of each cable 64, 65, and 66 is mounted to a corresponding bracket member 54 which another, free end of each cable 64, 65, and 66 is allowed to fall toward ground. By "ground" it should be understood that the free end of each cable 64, 65 and 66 may fall towards ground, a ship's deck, or a body of water depending upon the location of wind turbine 2. Once bracket members 54 and bracket elements 57 are installed, telescoping sections 38-40 of hydraulic jacking cylinders 34 are lowered creating further separation between third wind turbine blade 9 and support hub 4.

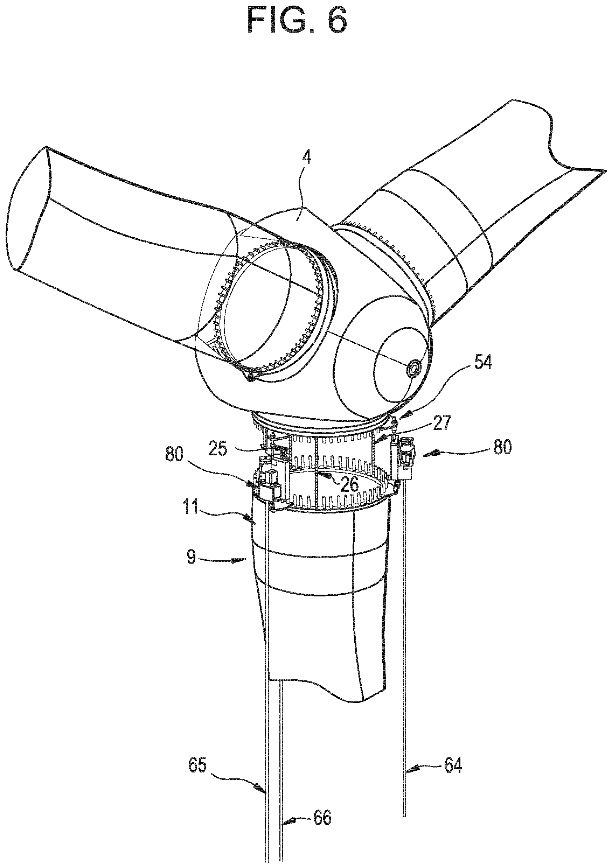

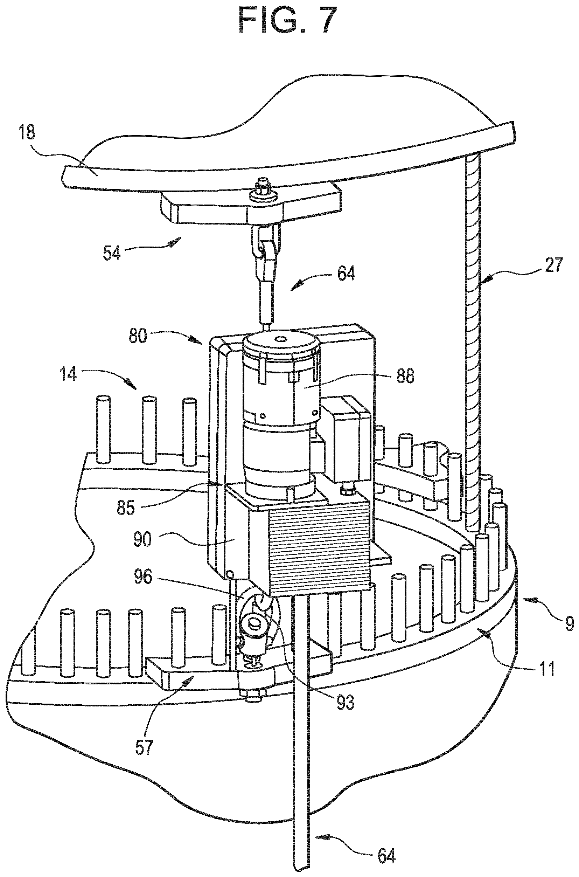

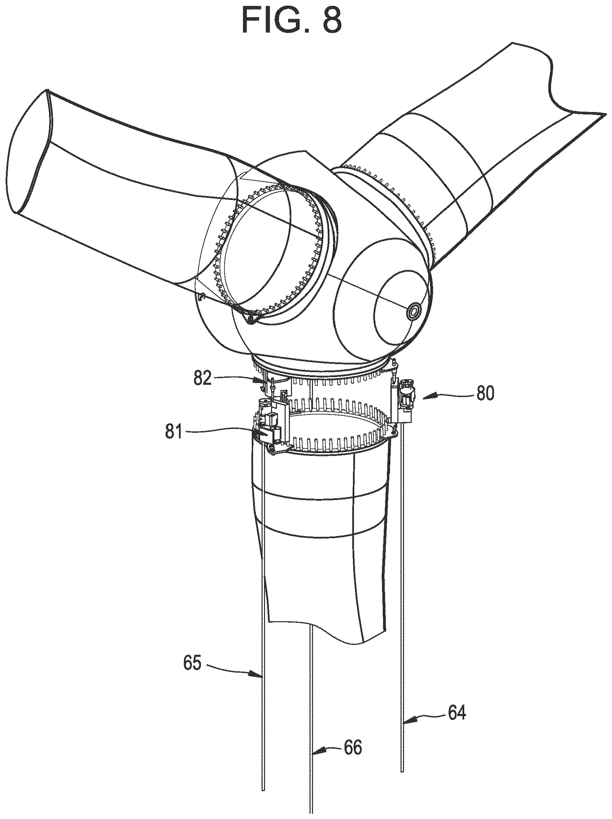

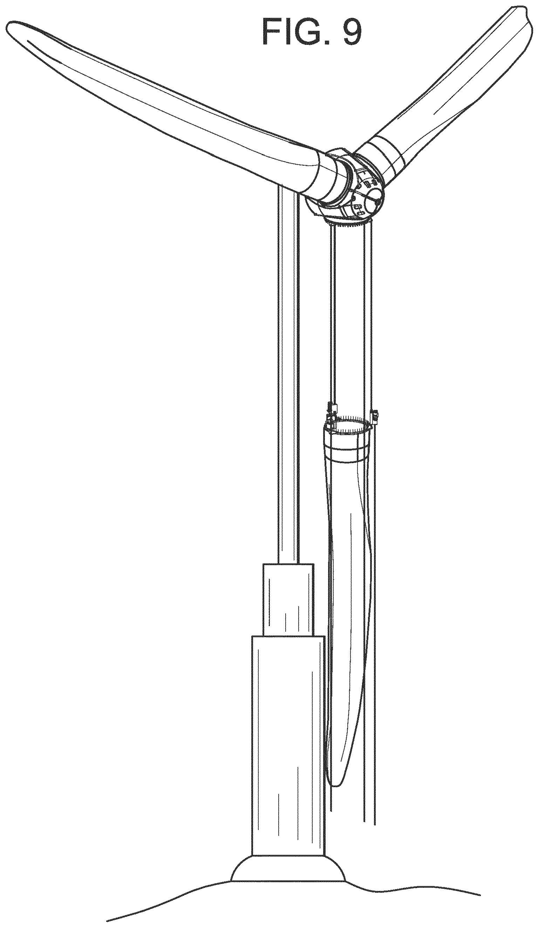

The additional separation allows for the mounting of cable climbing members (not claimed). More specifically, blade replacement system 20 further includes a plurality of cable climbing members 80, 81, and 82. Cable climbing members are connected to corresponding ones of cables 64, 65, and 66. Cable climbing members 80, 81, and 82 are controlled so as to climb from the free ends of each cable 64-66 toward bracket members 54, as shown in FIG. 6. As each winch 80, 81, and 82 is similarly formed, a detailed description will follow to FIG. 7 in describing winch 80 with an understanding that cable climbing members 81 and 82 include corresponding structure. Winch 80 includes a housing 85 that supports a motor 88, a cable climbing portion 90 and a shackle 93. Shackle 93 is connected to bracket element 57 through a coupler 96. Once all cable climbing members 80-82 are connected to corresponding bracket elements 57, telescoping sections 38-40 of hydraulic jacking cylinders 34 are further lowered transferring support of third wind turbine blade 9 from support members 25-27 to cable climbing members 80-82 as shown in FIG. 8. At this point, support members 25-27 may be removed, and cable climbing members 80-82 shifted or climbed down cables 64-66 to lower third wind turbine blade 9 from support hub 4 as shown in FIG. 9. The above steps may be revised to raise and install a new wind turbine blade.

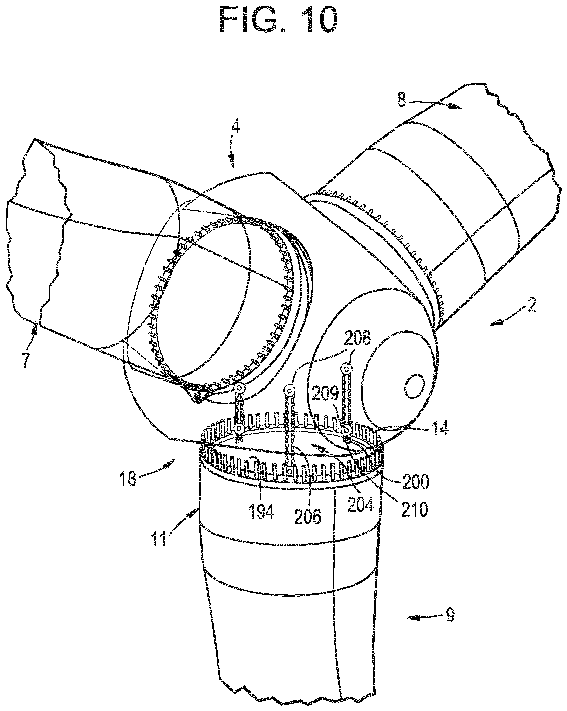

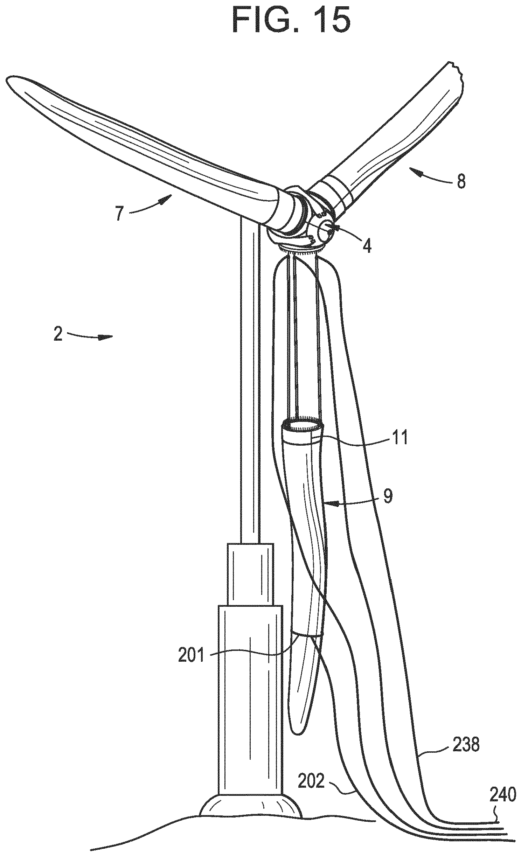

Reference will now follow to FIGs 10-16, wherein like reference numbers represent corresponding parts in the respective views, in describing an exemplary embodiment of the present invention. Root portion 11 of wind turbine blade 9 includes an inner surface 194. A plurality of hook members, one of which is indicated at 200, is attached to inner surface 194 of root portion 11. Prior to lowering wind turbine blade 9 to the ground, a tip rigging bracket 201 (FIG. 15) is secured to adjacent to tip portion 12. A ground based tip rigging line or tether 202 may be secured or connected to tip rigging bracket 201. As will be detailed more fully below, tether 202 allows personnel to shift tip portion 12 as wind turbine blade 9 is lowered to the ground.

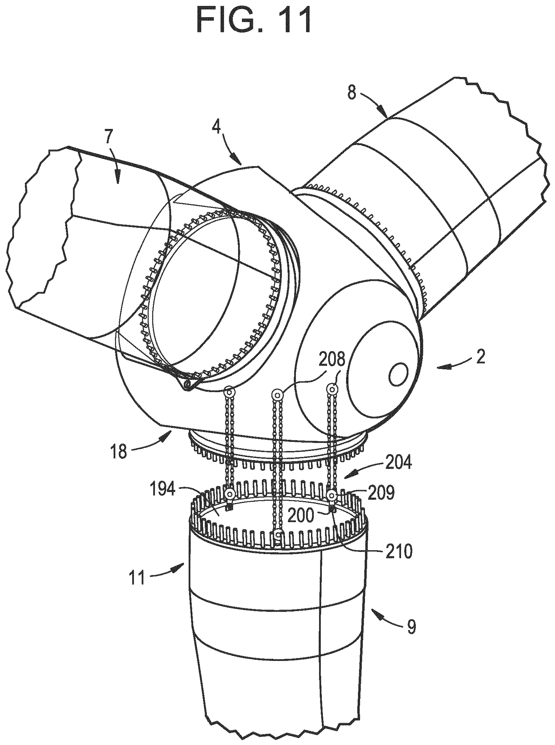

A plurality of first hoisting devices, one of which is indicated at 204, is secured between support hub 4 and wind turbine blade 9. Each of the plurality of first hoisting devices 204 may take the form of a chain hoist 206 having a first end 208 supported in support hub 4 and a second end 209 including a shackle 210 that is coupled to hook member 200. One or more chains (not separately labeled) may extend between first and second ends 208 and 209. Once connected, wind turbine blade 9 may be disconnected from blade receiving portion 18. After freeing array of mechanical fasteners 14, wind turbine blade 9 may be lowered a first distance from wind turbine support hub 4 by plurality of first hoisting devices 204, as shown in FIG. 11.

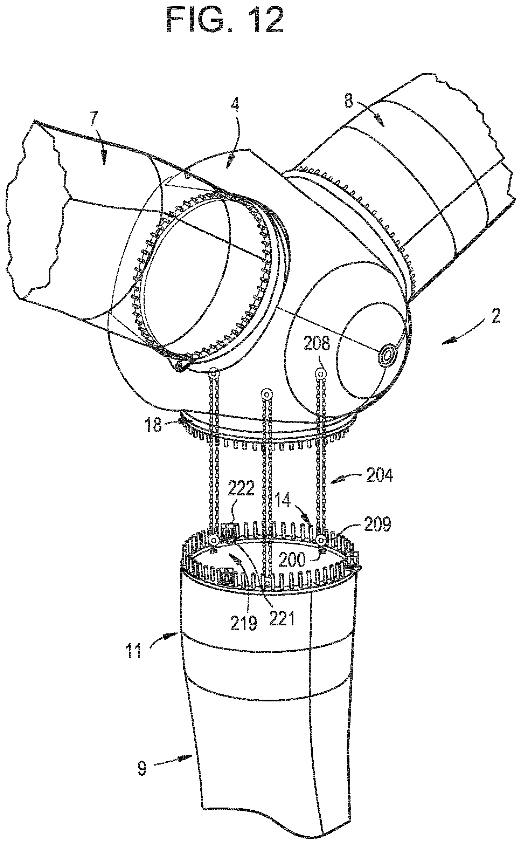

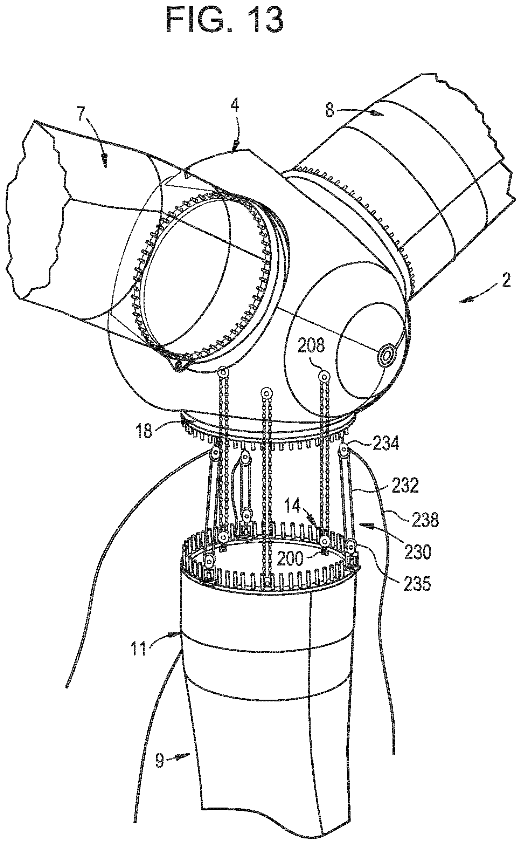

A plurality of hook elements, one of which is indicated at 219, may be secured to array of mechanical fasteners 14, as shown in FIG. 12. Each hook element 219 includes a base portion 221 and a hook eye portion 222. Base portion 221 may include one or more passages (not separately labeled) receptive to a corresponding one of array of mechanical fasteners 14. After connecting hook elements 219 to root portion 11, a plurality of second hoisting devices, one of which is indicated at 230, is connected between wind turbine support hub 4 and wind turbine blade 9, as shown in FIG. 13. Each of the plurality of second hoisting devices 230 may take the form of a block and tackle 232 that may be lifted up to personnel in wind turbine support hub 4. Each block and tackle 232 includes a first end portion 234 fixedly supported within wind turbine support hub 4 and a second end portion 235 coupled to hook eye portion 222. A cable or rope 238 is threaded through pulleys (not separately labeled) carried by first and second end portions 234 and 235. Rope 238 includes a tag end 240 that extends to the ground.

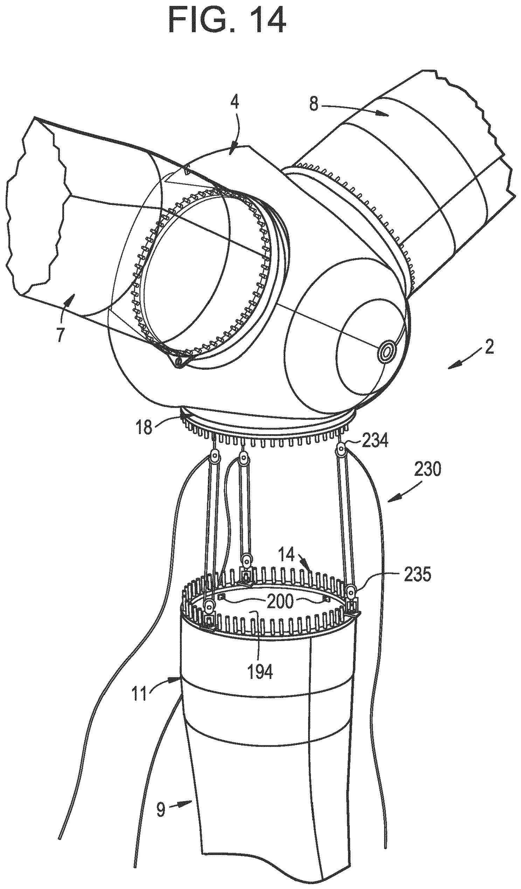

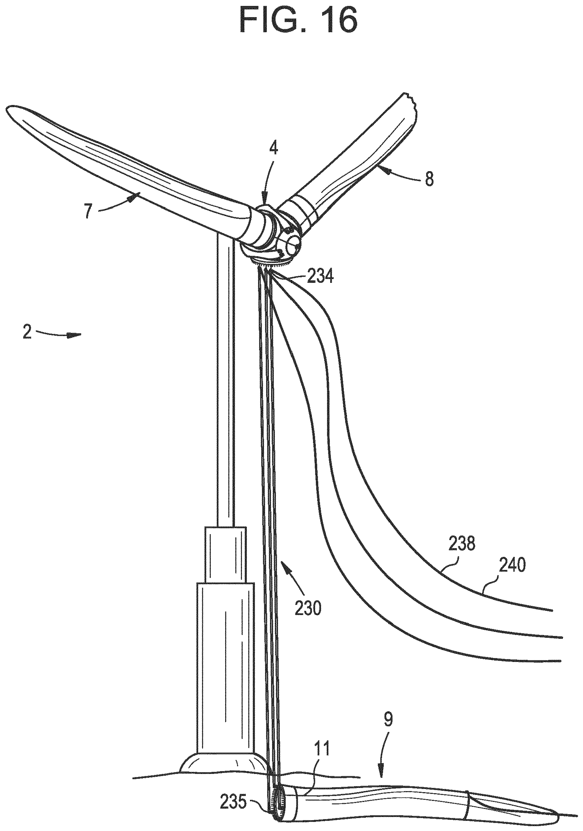

A handshake maneuver is performed after attaching the plurality of second hoisting devices 230. During the handshake maneuver, the plurality of first hoisting devices 204 are operated such that wind turbine blade 9 is supported by the plurality of second hoisting devices 230. Once wind turbine blade 9 is supported by the plurality of second hoisting devices 230, the plurality of first hoisting devices 204 may be disconnected and removed, such as shown in FIG. 14. The plurality of second hoisting devices 230 may be operated to lower wind turbine blade 9 toward the ground, as shown in FIG. 15. While lowering, tension may be applied to tether 202 to gradually move wind turbine blade 9 from a generally vertical orientation to a generally horizontal position. Wind turbine blade 9 may then be landed, as shown in FIG. 16. Tension in tether 202 may be applied through ground based winches or by a small mobile crane.

At this point it should be understood that the exemplary embodiments describe a system for lowering and raising wind turbine blades without the need for ground-based cranes. The exemplary embodiments employ multiple hoisting devices that are used to lower the wind turbine blade to the ground without the need for large, ground based cranes. It should also be understood that the number and type of hoisting devices may vary. Further, it should be understood that a new blade can be raised and secured to the hub by reversing the process described above.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of replacing a wind turbine blade (9) comprising:
connecting a plurality of first hoisting devices (204) between a wind turbine support hub (4) and the wind turbine blade (9);
suspending the wind turbine blade (9) from the wind turbine support hub (4) through the plurality of first hoisting devices (204);
connecting a plurality of second hoisting devices (230) between the wind turbine support hub (4) and the wind turbine blade (9), each of the second hoisting devices (230) having a first end portion (234) fixedly supported within wind turbine support hub (4) and a second end portion (235), said second end portion (235) being connected to the wind turbine blade (9), wherein a cable (238) is threaded through pulleys carried by said first and second end portions (234,235), said cable (238) including a tag end (240) that extends to the ground;
supporting the wind turbine blade (9) with the plurality of second hoisting devices (230);
disconnecting the plurality of first hoisting devices (204) from the wind turbine blade (9); and
lowering the wind turbine blade (9) to the ground, with the second hoisting devices (230).

2. The method of claim 1, wherein suspending the wind turbine blade (9) includes lowering the wind turbine blade (9) from the wind turbine support hub (4) through the plurality of first hoisting devices (204).

3. The method of any preceding claim, wherein connecting the plurality of first hoisting devices (204) includes coupling a hook member (200) of each of the plurality of first hoisting devices (204) to a corresponding hook member secured to an inner annular surface of the wind turbine blade (9).

4. The method of any preceding claim, wherein connecting the plurality of second hoisting devices (230) includes coupling each of the plurality of second hoisting devices to a corresponding hook element (200) mounted to a root end portion of the wind turbine blade (9).

5. The method of any preceding claim, wherein coupling each of the plurality of second hoisting devices (230) includes mounting the hook element (200) to one or more of an array of mechanical fasteners extending from a root end portion of the wind turbine blade.

6. The method of any preceding claim, wherein disconnecting the plurality of first hoisting devices (204) includes performing a handshake maneuver transferring support of the wind turbine blade from the plurality of first hoisting devices to the plurality of second hoisting devices.

7. The method of any preceding claim, further comprising:
securing a tip rigging bracket to the wind turbine blade (9); and
connecting a ground based tip rigging line to the tip rigging bracket.

8. The method of any preceding claim, further comprising: shifting a tip portion of the wind turbine blade (9) away from a wind turbine support tower as the wind turbine blade (9) is lowered through the plurality of second hoisting devices (230).

9. The method of any preceding claim, wherein connecting the plurality of first hoisting devices (204) to the wind turbine blade includes coupling a plurality of chain hoists between the wind turbine support hub (4) and the wind turbine blade (9).

10. The method of any preceding claim, wherein connecting the plurality of second hoisting devices (230) includes coupling a plurality of block and tackle devices between the wind turbine support hub (4) and the wind turbine blade (9).

## Patentansprüche

1. Ein Verfahren zum Ersetzen von einem Windturbinenblatt (9) umfassend:
verbinden von einer Vielzahl von ersten Hebevorrichtungen (204) zwischen einer Windturbinenstütznabe (4) und dem Windturbinenblatt (9);
aufhängen des Windturbinenblatts (9) an der Windturbinenstütznabe (4) durch die Vielzahl von ersten Hebevorrichtungen (204);
verbinden von einer Vielzahl von zweiten Hebevorrichtungen (230) zwischen der Windturbinenstütznabe (4) und dem Windturbinenblatt (9), wobei jede von den zweiten Hebevorrichtungen (230) einen ersten Endteil (234) hat, der fest innerhalb der Windturbinenstütznabe (4) gestützt ist und einen zweiten Endteil (235) hat, wobei der zweite Endteil (235) mit dem Windturbinenblatt (9) verbunden ist, wobei ein Kabel (238) durch vom ersten und zweiten Endteil (234, 235) getragene Umlenkrollen eingefädelt ist, wobei das Kabel (238) ein Anschlussende (240) umfasst, das sich bis zum Boden erstreckt;
stützen des Windturbinenblatts (9) mit der Vielzahl von zweiten Hebevorrichtungen (230);
trennen der Vielzahl von ersten Hebevorrichtungen (204) von dem Windturbinenblatt (9); und
absenken des Windturbinenblatts (9) auf den Boden mit der zweiten Hebevorrichtungen (230).

2. Das Verfahren des Anspruchs 1, wobei das Aufhängen des Windturbinenblatts (9) das Absenken des Windturbinenblatts (9) aus der Windturbinenstütznabe (4) mittels der Vielzahl von ersten Hebevorrichtungen (204) umfasst.

3. Das Verfahren von einem der vorhergehenden Ansprüche, wobei das Verbinden der Vielzahl von ersten Hebevorrichtungen (204) das Koppeln von einem Hakenelement (200) von jeder von der Vielzahl von ersten Hebevorrichtungen (204) an ein entsprechendes Hakenelement umfasst, das an einer inneren ringförmigen Fläche des Windturbinenblatts (9) befestigt ist.

4. Das Verfahren von einem der vorhergehenden Ansprüche, wobei das Verbinden der Vielzahl von zweiten Hebevorrichtungen (230) das Koppeln von jeder von der Vielzahl von zweiten Hebevorrichtungen an ein entsprechendes Hakenelement (200) umfasst, das an einem Wurzelendteil des Windturbinenblatts (9) angebracht ist.

5. Das Verfahren von einem der vorhergehenden Ansprüche, wobei das Koppeln von jeder von der Vielzahl von zweiten Hebevorrichtungen (230) das Anbringen des Hakenelements (200) an einem oder mehreren von einer Reihe von mechanischen Befestigungselementen umfasst, die sich von einem Wurzelendteil des Windturbinenblatts hinaus erstrecken.

6. Das Verfahren von einem der vorhergehenden Ansprüche, wobei das Trennen der Vielzahl von ersten Hebevorrichtungen (204) das Durchführen von einem Handshake-Verfahren umfasst, durch das die Abstützung des Windturbinenblatts von der Vielzahl von ersten Hebevorrichtungen auf die Vielzahl von zweiten Hebevorrichtungen übertragen wird.

7. Das Verfahren von einem der vorhergehenden Ansprüche, weiterhin umfassend:
befestigen von einer Spitzenaufrüsthalterung an dem Windturbinenblatt (9); und
verbinden von einer bodenbasierten Spitzenaufrüstleine mit der Spitzenaufrüsthalterung.

8. Das Verfahren von einem der vorhergehenden Ansprüche, weiterhin umfassend: das Abrücken von einem Spitzenteil des Windturbinenblatts (9) von einem Windturbinenstützturm, wenn das Windturbinenblatt (9) mittels der Vielzahl von zweiten Hebevorrichtungen (230) abgesenkt wird.

9. Das Verfahren von einem der vorhergehenden Ansprüche, wobei das Verbinden der Vielzahl von ersten Hebevorrichtungen (204) mit dem Windturbinenblatt das Koppeln von einer Vielzahl von Kettenhebezügen zwischen der Windturbinenstütznabe (4) und dem Windturbinenblatt (9) umfasst.

10. Das Verfahren von einem der vorhergehenden Ansprüche, wobei das Verbinden der Vielzahl von zweiten Hebevorrichtungen (230) das Koppeln von einer Vielzahl von Flaschenzügen zwischen der Windturbinenstütznabe (4) und dem Windturbinenblatt (9) umfasst.

## Revendications

1. Un procédé de remplacement d'une pale d'éolienne (9) comprenant :
raccorder une pluralité de premiers dispositifs de levage (204) entre un moyeu de support d'éolienne (4) et la pale d'éolienne (9) ;
suspendre la pale d'éolienne (9) du moyeu de support d'éolienne (4) moyennant la pluralité de premiers dispositifs de levage (204) ;
raccorder une pluralité de seconds dispositifs de levage (230) entre le moyeu de support d'éolienne (4) et la pale d'éolienne (9), chacun des seconds dispositifs de levage (230) ayant une première partie d'extrémité (234) supportée de manière fixe dans le moyeu de support d'éolienne (4) et une seconde partie d'extrémité (235), ladite seconde partie d'extrémité (235) étant reliée à la pale d'éolienne (9), dans lequel un câble (238) est enfilé à travers de poulies portées par lesdites parties d'extrémité première et seconde (234, 235), ledit câble (238) incluant une extrémité d'attache (240) qui s'étend jusqu'au sol ;
supporter la pale d'éolienne (9) avec la pluralité de seconds dispositifs de levage (230) ;
détacher la pluralité de premiers dispositifs de levage (204) de la pale d'éolienne (9) ; et
abaisser la pale d'éolienne (9) jusqu'au sol, avec les seconds dispositifs de levage (230).

2. Le procédé de la revendication 1, dans lequel suspendre la pale d'éolienne (9) inclut abaisser la pale d'éolienne (9) du moyeu de support d'éolienne (4) moyennant la pluralité de premiers dispositifs de levage (204).

3. Le procédé de l'une quelconque des revendications précédentes, dans lequel raccorder la pluralité de premiers dispositifs de levage (204) inclut coupler un élément à crochet (200) de chacun parmi la pluralité de premiers dispositifs de levage (204) à un élément à crochet correspondant fixé à une surface annulaire intérieure de la pale d'éolienne (9).

4. Le procédé de l'une quelconque des revendications précédentes, dans lequel raccorder la pluralité de seconds dispositifs de levage (230) inclut coupler chacun parmi la pluralité de seconds dispositifs de levage à un élément à crochet (200) correspondant monté sur une partie d'extrémité de racine de la pale d'éolienne (9).

5. Le procédé de l'une quelconque des revendications précédentes, dans lequel coupler chacun parmi la pluralité de seconds dispositifs de levage (230) inclut monter l'élément à crochet (200) sur un ou plusieurs parmi une série d'éléments mécaniques de fixation s'étendant à partir d'une partie d'extrémité de racine de la pale d'éolienne.

6. Le procédé de l'une quelconque des revendications précédentes, dans lequel détacher la pluralité de premiers dispositifs de levage (204) inclut effectuer une manœuvre d'établissement de liaison par laquelle le support de la pale d'éolienne est transféré de la pluralité de premiers dispositifs de levage à la pluralité de seconds dispositifs de levage.

7. Le procédé de l'une quelconque des revendications précédentes, comprenant en outre :
fixer une bride de réglage de pointe à la pale d'éolienne (9) ; et
relier une ligne de réglage de pointe raccordée au sol à la bride de réglage de pointe.

8. Le procédé de l'une quelconque des revendications précédentes, comprenant en outre : éloigner une partie de pointe de la pale d'éolienne (9) par rapport à une tour de support d'éolienne lorsque la pale d'éolienne (9) est abaissée moyennant la pluralité de seconds dispositifs de levage (230).

9. Le procédé de l'une quelconque des revendications précédentes, dans lequel raccorder la pluralité de premiers dispositifs de levage (204) à la pale d'éolienne inclut coupler une pluralité de palans à chaînes entre le moyeu de support d'éolienne (4) et la pale d'éolienne (9).

10. Le procédé de l'une quelconque des revendications précédentes, dans lequel raccorder la pluralité de seconds dispositifs de levage (230) inclut coupler une pluralité de dispositifs de mouflage entre le moyeu de support d'éolienne (4) et la pale d'éolienne (9).
